# EUROPEAN PATENT SPECIFICATION

(11) **EP 0 708 268 B1**
(45) Date of publication and mention of the grant of the patent: **20.03.2002**
(21) Application number: 95116596.8
(22) Date of filing: 20.10.1995
(51) Int. Cl.: F16F 9/46, F16F 9/516

(54) **Damper**
Dämpfer
Amortisseur

(30) Priority: 21.10.1994 JP 28153494; 29.09.1995 JP 27506195
(43) Date of publication of application: 24.04.1996
(73) Proprietor: YAMAHA HATSUDOKI KABUSHIKI KAISHA, Iwata-shi Shizuoka-ken, 438 (JP)
(72) Inventor: Tanaka, Akira, Iwata-shi, Shizuoka-ken, 438 (JP)
(74) Representative: Grünecker, Kinkeldey, Stockmair & Schwanhäusser Anwaltssozietät

(56) References cited:
- EP-A- 0 364 757
- EP-A- 0 400 395
- EP-A- 0 440 943
- EP-A- 0 608 427
- PATENT ABSTRACTS OF JAPAN vol. 940 no. 010 & JP-A-06 280921 (TOKICO LTD) 7 October 1994,

## Description

This invention relates to a damper (shock absorber) as indicated in the preamble part of claim 1. The damping force of said damper is adjustable.

For dampers to be used on vehicles such as automobiles, motorcycles, etc., it is desirable that their damping force can be easily adjusted according to their running conditions. Therefore, the applicant has disclosed dampers in which the amount and speed of the elongation and contraction of the damper are detected and the operating-pressure of the switching valve for opening or closing the oil-passage provided through the piston of the damper are varied by a linear solenoid. (See, for example, Japanese Unexamined Patent Publications H2-85535 and H2-182514).

The dampers disclosed in these applications are provided with a piston defining the cylinder into two primary oil-chambers, a control valve partitioning the piston provided within said piston into first and second auxiliary oil-chambers and an orifice located between these auxiliary oil-chambers. When the inner pressure of the second auxiliary oil-chamber exceeds a pressure set by a linear solenoid while the oil pressure of the high pressure side primary oil-chamber is introduced to the first auxiliary oil-chamber, the pilot valve is opened to depressurize the second auxiliary oil-chamber, and the pressure difference between both auxiliary oil-chambers moves the pilot valve to open the oil-passage between both primary oil-chambers and therefore the damping force is adjusted.

However, such a damper has a problem that, if a power source fails or any abnormality of control circuit occurs, and then the linear solenoid is deenergized, it becomes impossible to obtaind any damping force. Because, since the pilot valve is left opened, the working oil continuously flows from the first auxiliary oil-chamber through the orifice into the second auxiliary oil-chamber and thus the pressure difference between the first and second auxiliary oil-chambers generated when the oil flows through this orifice becomes greater to cause the control valve to be left moved toward the second auxiliary oil-chamber. Consequently, the oil-passage between both primary oil-chambers is left opened and it becomes impossible for the damper to generate its damping force.

Therefore, a damper disclosed in Japanese Unexamined Patent Publication H3-4046 - a family member of EP-A-400395- has been proposed to overcome such problems. This damper has a control valve formed with a diaphragm partitioning the first and second auxiliary oil-chambers, that is, one surface of this diaphragm is faced to the second auxiliary oil-chamber, and the space inside of an annular bank in contact with the other surface of the diaphragm is defined as the first auxiliary oil-chamber.

The pilot valve setting the inner pressure of the second auxiliary oil-chamber at a predetermined pressure corresponding to the magnetic force of the linear solenoid is integrally provided with a second valve so that, when the pilot valve is moved in the direction for opening the pilot passage bY deenergizing the linear solenoid, the second valve closes the pilot passage.

In this instant, the pressure of the second auxiliary oil-chamber is kept at constant value or higher by introducing working oil to the pilot passage through a second orifice bypassing the second valve, and the amount of oil flowing from the first and second auxiliary oil-chambers into the pilot passage is regulated. Consequently, the pressure difference between the first and second auxiliary oil-chambers is limited, the amount of movement of the control valve is limited, and the oil-passage between both primary oil-chamoers is throttled, so that a damping force is generated.

In such a damper as described above having a pilot valve provided with a second valve and a second orifice bypassing the second valve, pressure differences are generated between both sides of the second valve when working oil passes through the second orifice. Therefore, it becomes difficult for the pilot valve to return to its normal position when the linear solenoid is returned to its normal state by turning the power on or temporary abnormality of the control circuit is eliminated, that is, there is a problem that the recovery of the operation from the abnormal state is retarded.

Further, the damping force characteristics are dependent on the size of the second orifice while the linear solenoid is not energized, but small dispersion on machining of the second orifice size causes a greater fluctuation of the damping force characteristics. It is, therefore, required to improve machining accuracy. which causes such a problem that productivity becomes poor and its characteristics change during its usage for a long time. Therefore, an improved damper should allow to be preferably embodied such that it can be manufactured with improved productivity based on smaller dispersion of the damping characteristics as a smaller change of characteristics during the lifetime of the damper.

Accordingly, it is an objective of the present invention to improve a damper known from EP-A-400 395 such that a pilot valve used therein can quickly return to its normal operation when a solenoid is returned to its normal state by turning power on or by eliminating temporary abnormality of control circuits.

According to the present invention, the aforeindicated objective is performed by a damper as indicated above with the improvements according to the characterising portion of claim 1.

Preferred embodiments of the present invention partly facilitating manufacturing thereof, are laid down in the dependent claim.

In the following the present invention is explained in greater detail by means of several embodiments thereof in conjunction with the accompanying drawings, wherein:
Fig. 1 is a partially sectional view showing an embodiment of a damper regarding the piston part thereof,
Fig. 2 is a sectional view in larger scale showing the principal portion of the piston of Fig. 1,
Fig. 3 is a simplified view showing the normal operation state of the piston of Figs. 1 and 2,
Fig. 4 is a simplified view showing an abnormal operation state in which a linear solenoid is de-energised, and
Fig. 5 is a partially sectional view showing another embodiment of the present invention.

Referring to the drawings, the numeral 10 denotes a cylinder, and 12 denotes a piston which partitions the cylinder 10 into upper and lower primary oil-chambers 16 and 14, respectively. To the piston 12 is connected a piston rod 18 which is projected upward out of the cylinder 10.

The piston 12 has an outer case 12A open lowerside, and an upper body 12B, a middle body 12C and a lower body 12D. The last three bodies are inserted into the outer case 12A from the lowerside thereof in order. The lower body 12D has a control valve 20 inserted therein for sliding vertically.

Within the outer case 12A and the lower body 12D, a main oil-passage 22 is formed so as to connect both primary oil-chambers 14 and 16, and the control valve 20 closes and opens the main oil-passage 22 at its lowered and raised positions, respectively. That is, the control valve 20 is opened upperside and has its lower portion formed generally -in the shape of a mushroom-like bottomed cylinder. The peripheral edge underside of the inverted-umbrella-like projection lowers to come into contact with the opening 22a of the main oil-passage 22 disposed on the primary oil-chamber 14 side. The control valve 20 has a step portion 20a formed on the periphery thereof, and the pressure of the upper primary oil-chamber 16 works upward on this step portion 20a through the main oil-passage 22.

The inner surface of the upper opening of the control valve 20 faces a vibration insulating ring 24 made of resin or metal, and a coil sping 26 is inserted under compression between the control valve 20 and this vibration insulating ring 24. The coil spring 26, while pushing to fix the vibration insulating ring 24 on the lower surface of the middle body 12C of the piston 12, urges the control valve 20 downward.

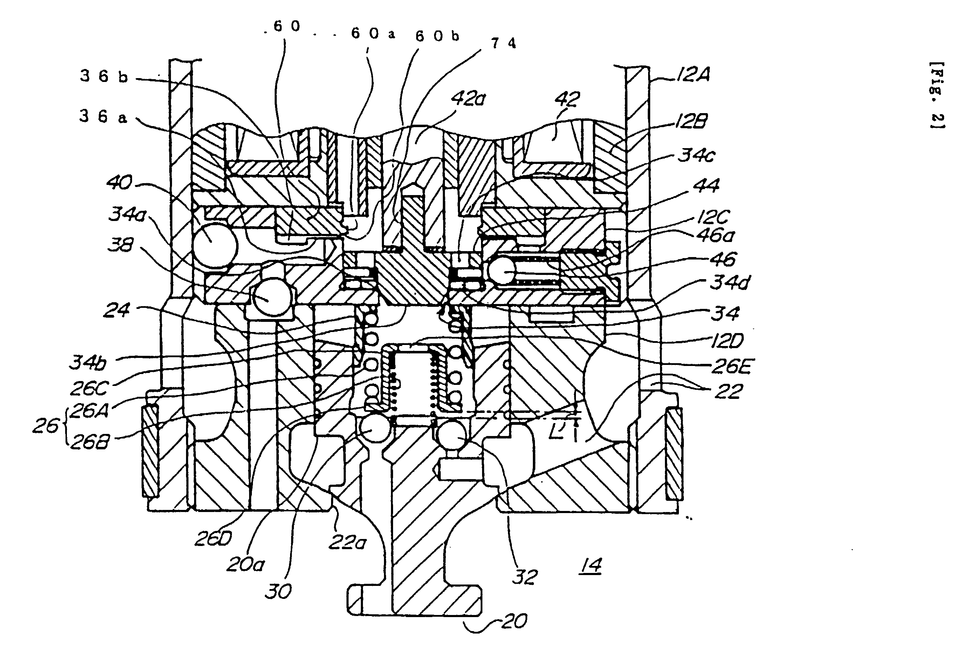

As shown in Fig.2, the coil spring 26 is composed of two coil springs 26A and 26B. The coil spring 26A is a strong one, and the rate of increase of the spring force F to the stroke S is larger, that is, its spring constant is larger. The coil spring 26B is weak, and the rate of increase of the spring force F to the stroke S is smaller, that is, its spring constant is smaller.

These coil springs 26A and 26B are put one over the other with a hat-like spacer 26C disposed therebetween, and are inserted between the control valve 20 and the vibration insulating ring 24. The lower end of the coil spring 26A comes from top into contact with the flange portion 26D of the spacer 26C. The coil spring 26B is inserted inside of the spacer 26C, and its upper and lower ends are in contact with the inner bottom of the spacer 26B and with the control valve 20, respectively. The spacer 26C has an oil hole 26E allowing oil to flow through the inside of the coil spring 26B. In the state shown in Fig.2 where the control valve 20 closes the main oil-passage 22, the flange portion 26D of the spacer 26C is spaced apart from the control valve 20 by a distance L.

The interior of the control valve 20 constitutes an auxiliary oil-chamber 28 to which is introduced the higher one of inner pressures of the primary oil-chambers 14 or 16 through the check valves 30 or 32, respectively. Each check valve 30 and 32 has a ball accommodated between a recess formed on the bottom of the auxiliary oil-chamber 28 and the flange portion 26D of the spacer 26C. Accordingly , the flange portion 26D constitutes a stopper for these balls (check valves 30 and 32).

The auxiliary oil-chamber 28 is in communication with a pilot passage-36 through a pilot valve 34, and the pilot passage 36 is further in communication with the primary oil-chambers 14 and 16 through the check valve 38 and 40, respectively. The pilot passage 36 has two passage portions 36a extending radially from the downstream of the pilot valve 34 and an annular portion 36b connecting the radial portions 36a with each other. The annular portion 36b is in communication with the check valves 38 and 40.

The pilot valve 34 is formed of a valve seat 34a on the piston 12 side and a valve 34b having a conical surface in contact with the valve seat 34a, and the valve 34b is urged downward by a linear solenoid 42. When energized, the linear solenoid 42 exerts a downward force corresponding to its magnetic force through its plunger 42a on the valve body 34b and thus the inner pressure of the auxiliary oil-chamber 28 at which the pilot valve 34 begins to be opened can be changed. The valve 34b is kept urged in the direction for opening the pilot valve 34 by a plate spring 34d (Fig.2).

This plate spring 34d has three nails formed by cutting an annular plate at its three peripheral portions and bending these cuts axially like nails so that the elasticity of these nails may be utilized. The plate spring 34d pushes the valve 34b upward in the direction for opening the pilot valve 34_while the linear solenoid 42 is not energized, and moves it to a position where a disc 44 (to be described hereafter) closes the pilot passage 36.

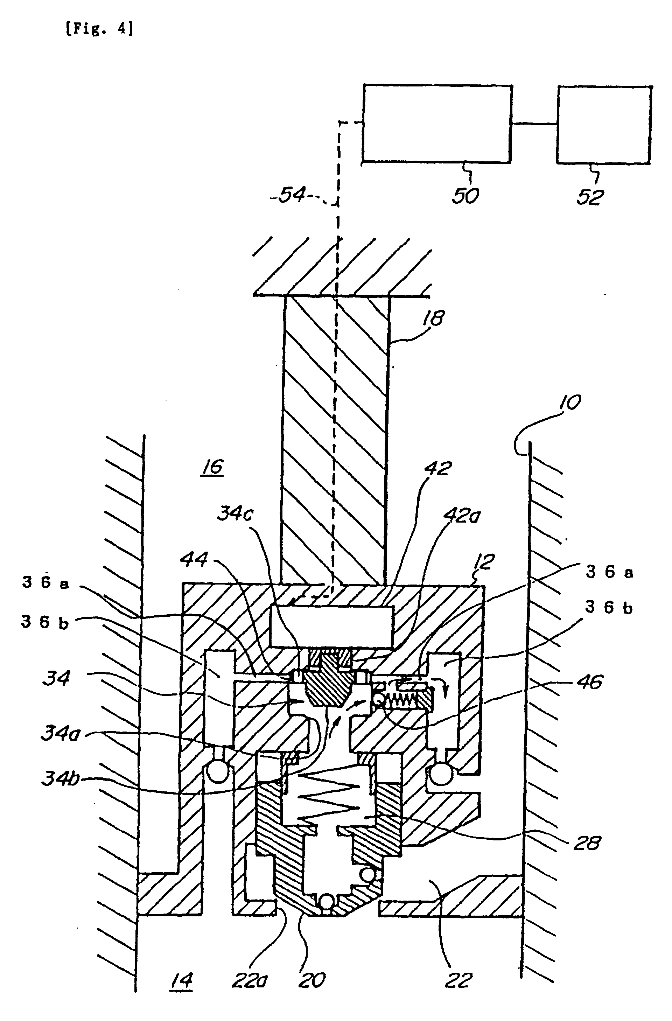

The valve 34b of the pilot valve 34 has a disc 44 positioned on the downstream of the pilot valve 34 and formed integrally therewith. While the linear solenoid 42 is not energized, the disc 44 is pushed upward to the position shown in Fig.4 together with the valve 34b by the restoring force of the plate spring 34d and the inner pressure of the auxiliary oil-chamber 28. In this instance, the peripheral surface of the disc 44 closes the pilot passage 36 completely or incompletely. The pilot passage 36 opens to the valve chamber of the pilot valve 34 on the downstream of the disc 44. Further, the valve body 34b has an oil-passage 34c formed to connect the downstream of the pilot valve 34 with the downstream of the disc 44 bypassing the disc 44.

Although the valve 34b of the pilot valve 34 is pushed upward as shown in Fig.4 while the linear solenoid 42 is not energized, the stop position of the valve 34b is determined by an annular projection 60a shown in Fig.2, that is, the middle body 12C of the piston 12 has an annular spacer 60 fitted therein from the linear solenoid 42 side, and this annular spacer 60 has also an annular projection 60a formed on the inner surface thereof. Therefore, when the valve 34b is raised while the linear solenoid 42 is not energized, the upper surface peripheral edge of the disc 44 comes from below into contact with this annular projection 60a. and the upward movement of the valve 34b is limited.

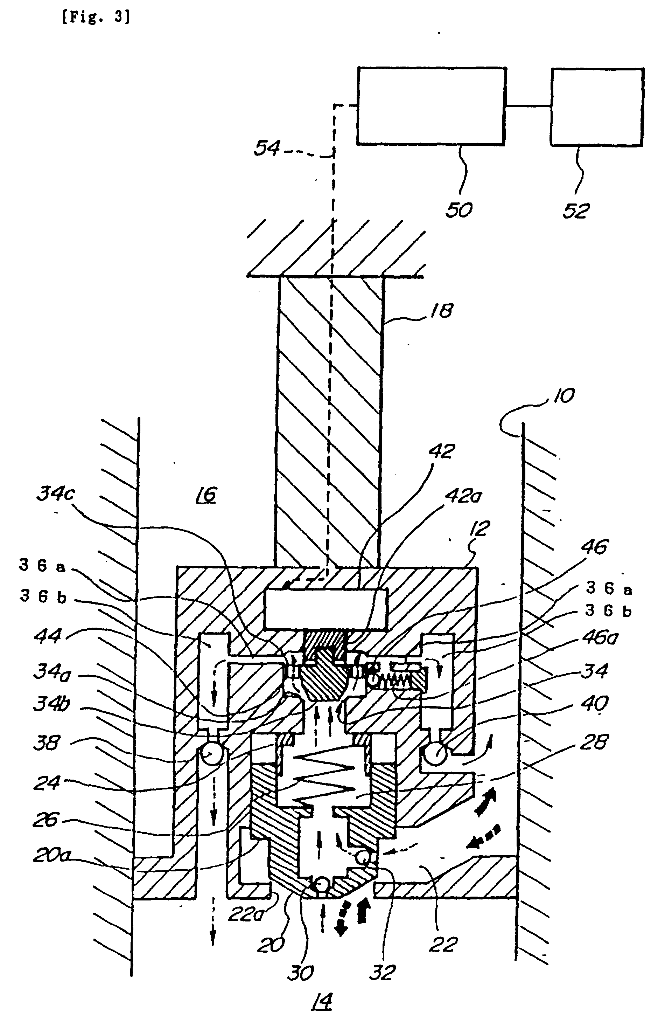

The lower surface of the annular projection 60a, that is, the surface 60b contacting to engage with the upper surface of the disc 44 is formed as an inclined surface so that it may not come into surface contact with the upper surface of the disc 44. The object of such forming is to make it possible for the valve 34b to quickly return to the state shown in Figs.2 and 3 at the moment when the linear solenoid begins to be energized.

That is, if the lower surface of the annular projection 60a is in surface contact with the upper surface of the disc 44, when the linear solenoid is energized and pushes downward the valve 34b, the area of the upper surface of the valve 34b on which hydraulic pressure is applied is reduced by an area of this surface contact. In addition, pulling apart two surfaces in surface contact requires a larger force also due to the effect of the working oil viscosity than pulling apart those in line contact. The lower surface 60b of the annular projection 60a is inclined for the purpose of decreasing the reduction of the area on which hydraulic pressure is applied to make it possible to pull the valve 34b apart from the annular projection 60a with a small force.

Therefore, while the linear solenoid 42 is energized, the disc 44 opens the pilot passage 36 as shown in Fig.2, and the working oil flows through the plate spring 34d into the pilot passage 36 through the oil-passage 34c. In this state, the oil-passage 34c constitutes part of the pilot passage 36. While the linear solenoid 42 is not energized, the valve 34b is pushed upward by the restoring force of the plate spring 34d and the inner pressure of the auxiliary oil-chamber 28, and the disc 44 closes the pilot passage 36.

The middle body 12C of the piston 12 is provided with a one-way valve 46 which, in a state in which the pilot passage 36 is closed by the disc 44, introduces the working oil from the downstream of the pilot valve 34 to the pilot passage 36 bypassing the disc 44. The one-way valve 46 is constituted of a ball relief valve which opens when the working oil pressure exceeds a predetermined value. The predetermined set value is dependent on the spring force of the coil spring 46a which pushes the valve ball against the valve seat. This one-way valve may be formed of a check valve and a fixed throttle, but the relief valve is suitable for accurately setting the operating pressure and thus for improving accuracy. Further, changes of characteristics caused due to long usage are smaller.

In Figs.3 and 4, the numerals 50 and 52 denote a control circuit and a sensor, respectively. The sensor 52 detects the moving speed and position of the piston 12 relative to the cylinder 10. When the damper is installed on a vehicle, the sensor 52 may be such that for detecting data showing the travelling condition such as travelling speed, steering angle, acceleration and deceleration. The desired damping characteristics may be inputted by manual switches instead of the sensor 52.

The control circuit 50 calculates required damping force from control characteristics inputted beforehand on the basis of the data showing the moving speed and position of the piston 12 or travelling conditions of the vehicle, acquires energizing current for the linear solenoid 42 required for generating this damping force, and energizes the linear solenoid 42 with this energizing current. This energizing current is supplied through an electric wiring 54 passing through the piston rod 18.

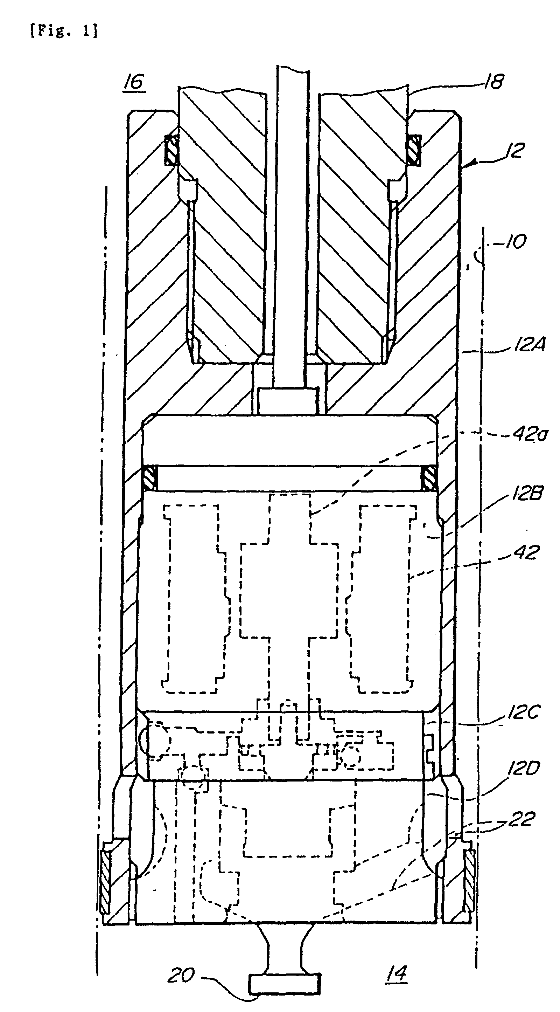

When the damper is contracted, the piston 12 is pushed downward as seen in Figs.1 and 2. Therefore, the inner pressure of the lower primary oil-chamber 14 is raised and, since the working oil flows into the auxiliary oil-chamber 28 through the check valve 30, the inner pressure of the auxiliary oil-chamber 28 is raised. On the other hand, since the valve 34b of the pilot valve 34 closes the valve seat 34a at a pressure predetermined by the linear solenoid 42, the pilot valve 34 is opened when the inner pressure of the auxiliary oil-chamber 28 exceeds this set pressure of the pilot valve 34, and the working oil escapes into the upper primary oil-chamber 16 through the plate spring 34d, oil-passage 34c and pilot passage 36, then through the check valve 40.

Therefore, since the auxiliary oil-chamber 28 is depressurized, the control valve 20 is pushed upward by the pressure in the lower primary oil-chamber 14, main oil-passage 22 is opened, and oil flows from the primary oil-chamber 14 into the primary oil-chamber 16. When the pressure difference between both oil-chambers 14 and 16 becomes smaller than a definite value, the control valve 20 is returned by the coil spring 26 and closes the main oil-passage 22. By repeating above actions, the piston 12 comes down. The flow of the working oil while being contracted is shown in Fig.3 with solid line arrows.
Here, the coil spring 26 is a serial combination of a strong spring 26A and a weak spring 26B, and only the weak spring 26B functions until the upper surface of the control valve 20 comes into contact with the flange portion 26D of the spacer 26C, in other words, until the control valve 20 is raised by distance corresponding to the spacing L. Therefore, the spring force F of the coil spring 26 is weak; thus the control valve 20 can easily move even though the pressure difference between both primary oil-chambers 14 and 16 is small, and the damping force can be smoothly generated from small initial load. Further, since the pressure difference between both primary oil-chambers 14 and 16 also becomes larger when the load applied on the damper becomes larger, the upward force applied on the control valve 20 also increases. When the control valve 20 travels by a distance longer than L, the stronger spring 26A also functions thereafter. In this instance, the length of the weak spring 26B is limited to the depth of the spacer 26C and is no more compressed. Therefore, only the spring force F of the stronger spring 26A is asserted on the control valve 20. Since the spring force of the coil spring 26 increases as described above, the control valve 20 functions only after the pressure difference between the primary oil-chambers 14 and 16 is large enough, and shocks and vibrations are prevented from occurring while the control valve 20 is functioning.

When the damper is elongated, the piston 12 is pulled upward. Therefore, the upper primary oil-chamber 16 is pressurized, and its pressure is introduced to the auxiliary oil-chamber 28 through the main oil-passage 22 and the check valve 32 of the control valve 20. When the iner pressure of the auxiliary oil-chamber 28 exceeds a value set by the linear solenoid, the pilot valve 34 is opened, and oil escapes into the lower primary oil-chamber 14 through the oil-passage 34c, pilot passage 36 and check valve 38. Therefore, the auxiliary oil-chamber 28 is depressurized, the control valve 20 is raised to open the main oil-passage 22 by the difference between the pressure of the primary oil-chamber 16 acting on the step portion 20a of the control valve 20 and the pressure of the auxiliary oil-chamber 28.

Therefore, when oil flows from the primary oil-chamber 16 to the primary oil-chamber 14 and the pressure difference between both primary oil-chambers 14 and 16 becomes smaller than a definite value, the main oil-passage 22 is closed, and the piston 12 goes up repeating the actions above. It is the same as that in the case of damper contraction that mainly the weaker spring 26B functions for the small initial load of the control valve 20 while mainly the stronger spring 26A functions for the greater load. The flow of the working oil in damper elongation is shown in Fig.3 with broken line arrows.

Although above mentioned are operations while the linear solenoid 42 is normally functioning, while the power source fails, when temporary abnormality occurs in the control circuit 51, when temporary imperfect contact occurs in the electric wiring 54, etc., the linear solenoid 42 may be deenergized. In such an instance, the force for pushing down the valve body 34b of the pilot valve 34 vanishes. Therefore, the valve body 34b of the pilot valve 34 is pushed up by the elongating force of the-plate spring 34d, and the pilot passage 36 is closed by the disc 44.

Therefore, when the inner pressure of the auxiliary oil-chamber 28 reaches the set pressure of the one-way valve 46, the one-way valve 46 is opened and the working oil is let escape from the valve chamber of the pilot valve 34 into the pilot passage 36. Consequently, some definite damping force can be generated.

Since the oil-passage 34c of the valve body 34b is positioned opposite to the upper wall of the valve chamber of the pilot valve 34, the pressures on both sides of the disc 44 of the valve body 34b are kept the same. Although the one-way valve 46 causes some pressure difference between the upstream working oil and the downstream working oil, since the pressure on the downstream side of this one-way valve is not introduced to the upper surface of the valve body 34b, the valve body 34b is not pushed up strongly by this pressure difference.

Therefore, when the power source in failure recovers, or the temporary abnormality of the control circuit 52 or wiring 54 is eliminated, and the linear solenoid 42 returns to its normal operation, the valve body 34b can quickly return to its normal position shown in Figs.2 and 3. That is, its return to normal operating state is quickly achieved. Further, the one-way valve 46 can exactly control the operating pressure by setting the coil spring 46a.

The embodiments above are those in which the control valve 20, pilot valve 34, pilot passage 36, linear solenoid 42, etc., are provided on the piston 12. However, in this invention, these components may be installed at positions other than the piston, e.g., on the cylinder side. Further, on those provided with a reserve tank for reserving the working oil, these components may be provided on this reserve tank.

Although the disc 44 is not limited to a sliding valve as in the embodiment above, it is important for this invention that, in the state with the pilot passage 36 closed by this disc 44, the lower pressure of the pilot passage 36 depressurized by the one-way valve 46 is not introduced to the surface on the back side (side opposite to the pilot valve 34) of the valve body 34b. Although the pressure on the pilot valve 34 side is introduced to the back side of the valve body 34b through the oil-passage 34c in this embodiment, other structure may be of course employed instead of this oil-passage 34c if only it has a similar function.

Although the valve body 34b is pushed up by a plate spring 34d while the linear solenoid is not energized, if the damper is installed bottom up, this plate spring 34d may be eliminated by utilizing the gravity working on the valve body 34b.

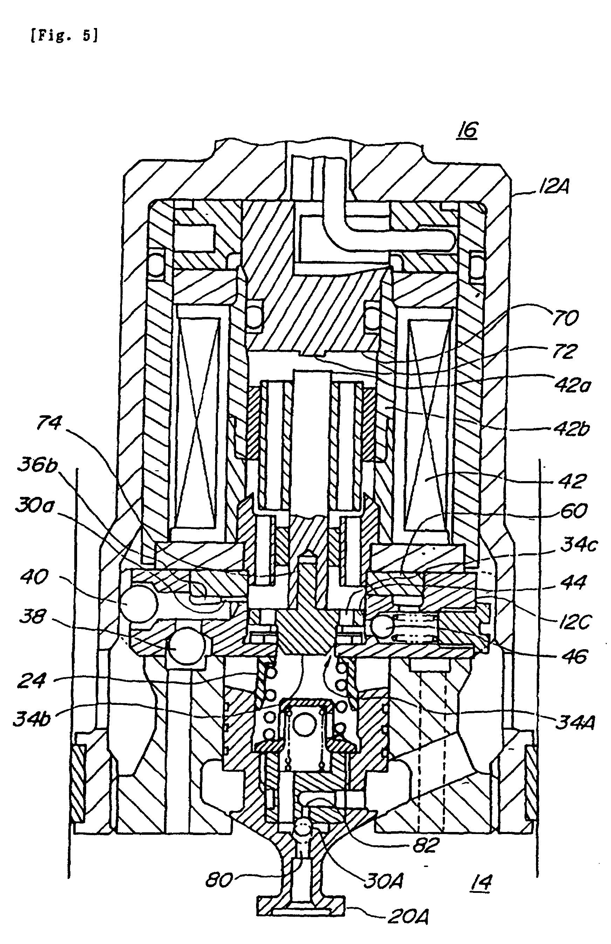

Fig.5 is a sectional view showing part of a piston for another embodiment. The basic structure of this embodiment is the same as that of the first embodiment shown in Figs.1 through 4 above, and its detailed description is omitted by assigning the same reference numeral to the same component.

In the embodiment shown in Fig.5, the stopper structure for the pilot valve 34A is different. That is, when the power source for the linear solenoid 42 is cut off, the pilot valve 34A is stopped at its position for closing the pilot passage 36 (36a, 36b) by letting the plunger 42a of the linear solenoid 42 hit against a block member 70.

The block member 70 is inserted into the guide cylinder 42b for the linear solenoid 42 so as to plug it from top (opposite side of the pilot valve 34A). A projection 72 which functions as a stopper is formed on the surface of the block member 70 opposite to the plunger 42a.

Therefore, when the power supply for the linear solenoid is shut off and the pilot valve 34A moves upward in Fig.5, the plunger 42a hits against this projection 72 and stops. The height of the projection 72 and the length of the plunger 42a are of course set so that, in this state, the disc 44 of the pilot valve 34A closes the radial passage portion 36a of the pilot passage 36.

In this embodiment, while the linear solenoid 42 is not energized, the plunger 42a hits against the projection 72 and the ascent of the valve body 34b is limited. That is, nothing relates with the valve body 34b in this instance. Therefore, the disc 44 of the valve body 34b does not incline while moving, and always can move smoothly. In the embodiment shown in Figs.2 through 4, since the periphery of the disc 44 comes into contact with the inclined lower surface 60b of the annular projection 60a, there have been problems that the return of the valve body 34b is not smooth, or the damping force generated in this state becomes unstable. Its reason is described below.

To make the valve body 34b slide smoothly, the fitting portion 74 between the valve body 34b and the plunger 42 has been usually provided with a diametral clearance of about 100∼150 µm, and a diametral clearance of about 100 µm is provided between the periphery of the disc 44 and the sliding surface of the middle body 12C. Therefore, the valve body 34b plays by about 100 µm in the diametral direction. However, in the case where the annular projection 60a functions as a stopper as described referring to Fig.2, the diametral play of the valve body 34b makes incline the disc 44 in contact with this inclined lower surface 60b.

Therefore, the disc 44 bites at this inclined surface 60b, and it may become impossible for the disc 44 to quickly separate from the annular projection 60a when the linear solenoid 42 is reenergized. Further, when the disc 44 is in contact with the annular projection 60a in an inclined state, the closure of the radial passage portion 36a of the pilot passage 36 by the disk 44 becomes unstable, and the resistance acting on the working oil becomes unstable. On the contrary, in the embodiment shown in Fig.5, since the disc 44 is never inclined, the the valve body 34b returns smoothly,-and the damping force obtained while the linear solenoid 42 is not energized becomes stable.

The embodiment shown in Fig.5 is further different from that shown in Figs.2 through 4 in that two check valves 30 and 32 in the embodiment of Figs.2 through 4 is replaced with a single check valve 30A. That is, the control valve 20A is provided with two oil-passages 80 and 82 formed opposite to each other on both sides of a single check valve 30A, and the working oil is introduced from one primary oil-chamber 14 or 16 to the auxiliary oil-chamber 28 througn one of these oil-passages 80 or 82. With this structure, only one check valve is sufficient and the control valve can be lighter-weighted.

As described above, according to claim 2, since the valve body (34b) of the pilot valve (34 or 34A) is integrally provided with a disc (44) so that, while the linear solenoid (42) is not energized, this disc (44) closes the pilot passage (36) so as to introduce the pressure on the downstream side of the pilot valve (34, 34A) to the surface of the valve body (34b) on the opposite side of the pilot valve (34, 34A) through an oil-passage (34c), and further-so that the working fluid is introduced from the downstream side of this pilot valve (34, 34A) to the pilot passage bypassing the disc (44) through the one-way valve (46), the pressure difference between both sides of the one-way valve (46) will not work on the valve body 34b. Therefore, when the linear solenoid (42) returns to the normal state, the valve body can quickly move to its normal position.

Although the one-way valve used here can be constructed with a combination of a check valve and a fixed throttle, it is desirable to make it a relief valve which is opened at a definite set pressure (Claim 2). In this case, since the set pressure is set by means of a spring (46a), the characteristic of the linear solenoid in the deenergized state can be made uniform by making the characteristic of this spring uniform, and the productivity is improved. Further, although the characteristic of the fixed throttle is apt to change due to wear caused by long usage, the spring has no such a weak point, and its characteristic is stable even in long usage.

## Claims

1. A damper comprising a cylinder (10) and a piston (12) slideably received therein to define two primary oil chambers (14,16) in said cylinder (10), an auxiliary oil chamber (28) into which is introduced an inner pressure of a high pressure side primary oil chamber (14,16), a pilot valve (34,34A) being operated by a solenoid (42) adapted to operate the pilot valve (34,34A) to be closed or to be opened when an inner pressure of said auxiliary oil chamber (28) exceeds a predetermined value to relieve working oil from said auxiliary chamber (28) into a low pressure side primary oil chamber (14,16) through a pilot passage (36), and a control valve (20) for controlling a main oil passage (22) which connects both of said primary oil chambers (14,16) according to a difference between the inner pressures of said auxiliary oil chamber (28) and said high pressure side primary oil chamber (14,16), wherein said pilot valve (34,34A) comprises a valve body (34b) accommodated in a valve chamber of said pilot valve (34,34A) being adapted to close said pilot passage (36) when the solenoid (42) is de-energized,
**characterized in that**
said pilot valve (34,34A) further comprises another member (44) partitioning said valve chamber, said another member (44) being adapted and arranged to close said pilot passage (36) when the solenoid (42) is de-energized and **in that** said another member (44) comprising oil passages (34c), so that when the another member (44) is in its closing position the pressure acting on the surfaces of said another member (44) facing in the direction of its movement is essentially the same.

2. A damper according to claim 1, **characterized in that** said member comprises a disk (44), preferably integrally provided with a valve body (34b) of the pilot valve (34,34A).

3. A damper according to claim 2, **characterized in that** said disk (44) is adapted to close said pilot passage (36) with a peripheral surface thereof.

4. A damper as claimed in at least one of the preceding claims 1 to 3, **characterized in that** the pilot passage (36) is dosed at the spot downstream of said pilot valve (34,34A).

5. A damper as claimed in at least one of the preceding claims 1 to 4, **characterized in that** a one-way valve (46) is provided for introducing working oil from a downstream side of said pilot valve (34,34A) to said pilot passage (36) by-passing said member (44) when said member (44) doses said pilot passage (36) wherein said member (44) keeps the inner pressure of said auxiliary oil chamber (28) at a predetermined pressure value.

6. A damper according to claim 5, **characterized in that** said one-way valve (46) comprises a relief valve to be opened at said predetermined pressure value.

## Patentansprüche

1. Dämpfer mit einem Zylinder (10) und einem Kolben (12), gleitbar darin aufgenommen, um zwei Hauptölkammern (14, 16) in dem Zylinder (10) zu begrenzen, einer Hilfsölkammer (28), in die ein Innendruck von einer Hochdruckseite der Hauptölkammer (14, 16) eingeleitet wird, ein Pilotventil (34, 34A), das durch eine Magnetspule (42) betätigt wird, vorgesehen um das Pilotventil (34, 34A) zu betätigen, um geschlossen oder geöffnet zu werden, wenn ein Innendruck der Hilfsölkammer (28) einen vorbestimmten Wert übersteigt, um Arbeitsöl aus der Hilfsölkammer (28) in eine Niederdruckseite der Hauptölkammer (14, 16) durch einen Pilotdurchgang (36) zu entlasten, und ein Steuerventil (20) zum Steuern eines Hauptöldurchganges (22), der beide der Hauptölkammern (14, 16) entsprechend eines Unterschiedes zwischen dem Innendruck der Hilfsölkammer (28) und demjenigen der Hochdruckseite der Hauptölkammer (14, 16) verbindet, wobei das Pilotventil (34, 34A) einen Ventilkörper (34b) aufweist, aufgenommen in einer Ventilkammer des Pilotventiles (34, 34A), vorgesehen den Pilotdurchgang (36) zu schließen, wenn die Magnetspule (42) stromlos gemacht wird,
**dadurch gekennzeichnet, daß**
das Pilotventil (34, 34A) außerdem ein weiteres Teil (44) aufweist, das die Ventilkammer aufteilt, wobei das weitere Teil (44) vorgesehen und angeordnet ist, um den Pilotdurchgang (36) zu schließen, wenn die Magnetspule (42) stromlos gemacht wird und dadurch, daß das weitere Teil (44) Öldurchgänge (34c) aufweist, so daß dann, wenn das weitere Teil (44) in seiner geschlossenen Position ist, der Druck, der auf den Oberflächen des weiteren Teiles (44) wirkt, der in die Richtung seiner Bewegung weist, im wesentlichen derselbe ist.

2. Dämpfer nach Anspruch 1, **dadurch gekennzeichnet, daß** das Teil eine Scheibe (44) aufweist, vorzugsweise einstückig versehen mit einem Ventilkörper (34b) des Pilotventiles (34, 34A).

3. Dämpfer nach Anspruch 2, **dadurch gekennzeichnet, daß** die Scheibe (44) vorgesehen ist, den Pilotdurchgang (36) mit einer Umfangsoberfläche derselben zu schließen.

4. Dämpfer, nach zumindest einem der vorhergehenden Ansprüche 1 bis 3, **dadurch gekennzeichnet, daß** der Pilotdurchgang (36) an der Stelle stromab des Pilotventiles (34, 34A) geschlossen ist.

5. Dämpfer, nach zumindest einem der vorhergehenden Ansprüche 1 bis 4, **dadurch gekennzeichnet, daß** ein Rückschlagventil (46) zum Einleiten von Arbeitsöl von einer stromabwärtigen Seite des Pilotventiles (34, 34A) zu dem Pilotdurchgang (36) vorgesehen ist, unter Überbrücken des Teiles (44), wenn das Teil (44) den Pilotdurchgang (36) schließt, wobei das Teil (44) den Innendruck der Hilfsölkammer (28) bei einem vorbestimmten Wert hält.

6. Dämpfer nach Anspruch 5, **dadurch gekennzeichnet, daß** das Rückschlagventil (46) ein Entlastungsventil ist, das bei einem vorbestimmten Druckwert geöffnet wird.

## Revendications

1. Amortisseur comprenant un cylindre (10) et un piston (12) reçu en coulissement dans celui-ci afin de définir deux chambres à huile primaires (14, 16) dans ledit cylindre (10), une chambre à huile auxiliaire (28) à l'intérieur de laquelle est introduite une pression interne d'une chambre à huile primaire côté haute pression (14, 16), un clapet pilote (34, 34A) étant actionné par un solénoïde (42) adapté pour actionner le clapet pilote (34, 34A) pour qu'il soit fermé ou ouvert lorsqu'une pression interne de ladite chambre à huile auxiliaire (28) dépasse une valeur prédéterminée afin de décharger l'huile de fonctionnement de ladite chambre auxiliaire (28) à l'intérieur d'une chambre à huile primaire côté basse pression (14, 16) par l'intermédiaire d'un passage pilote (36), et un clapet de régulation (20) destinée à réguler un passage d'huile principal (22) qui connecte les deux dites chambres à huile primaires (14, 16) en fonction d'une différence entre les pressions internes de ladite chambre à huile auxiliaire (28) et de ladite chambre à huile primaire côté haute pression (14, 16), dans lequel ledit clapet pilote (34, 34A) comprend un corps de clapet (34b) logé dans une chambre de clapet dudit clapet pilote (34, 34A) qui est adapté pour fermer ledit passage pilote (36) lorsque le solénoïde (42) est désexcité,
**caractérisé en ce que**
ledit clapet pilote (34, 34A) comprend en outre un autre élément (44) qui sépare ladite chambre de clapet, ledit autre élément (44) étant adapté et aménagé de manière à fermer ledit passage pilote (36) lorsque le solénoïde (42) est désexcité, et **en ce que** ledit autre élément (44) comprend des passages d'huile (34c), de sorte que, lorsque l'autre élément (44) est dans sa position de fermeture, la pression qui agit sur les surfaces dudit autre élément (44) faisant face au sens de son déplacement est essentiellement identique.

2. Amortisseur selon la revendication 1, **caractérisé en ce que** ledit élément comprend un disque (44), comportant de préférence de manière intégrée un corps de clapet (34b) du clapet pilote (34, 34A).

3. Amortisseur selon la revendication 2, **caractérisé en ce que** ledit disque (44) est adapté pour fermer ledit passage pilote (36) avec une surface périphérique de celui-ci.

4. Amortisseur selon au moins l'une des revendications précédentes 1 à 3, **caractérisé en ce que** le passage pilote (36) est fermé au point situé en aval dudit clapet pilote (34, 34A).

5. Amortisseur selon au moins l'une des revendications précédentes 1 à 4, **caractérisé en ce qu'**un clapet unidirectionnel (46) est fourni afin d'introduire de l'huile de fonctionnement à partir d'un côté aval dudit clapet pilote (34, 34A) jusqu'au dit passage pilote (36) en dérivation dudit élément (44) lorsque ledit élément (44) ferme ledit passage pilote (36), dans lequel ledit élément (44) maintient la pression interne de ladite chambre à huile auxiliaire (28) à une valeur de pression prédéterminée.

6. Amortisseur selon la revendication 5, **caractérisé en ce que** ledit clapet unidirectionnel (46) comprend un clapet de décharge devant être ouvert à ladite valeur de pression prédéterminée.
